# FASCICULE DE BREVET EUROPEEN

(11) **EP 0 730 072 B1**
(45) Date de publication et mention de la délivrance du brevet: **28.12.2005**
(21) Numéro de dépôt: 96400254.7
(22) Date de dépôt: 07.02.1996
(51) Int. Cl.: E05B 49/00, B60R 25/00

(54) **Ensemble constitué d'une serrure électrique de portière avec fonction de secours électrique et de ses moyens de commande**
Anordnung bestehend aus einem elektrischen Türschloss mit einer elektrischen Notfunktion und aus seinen Steuerungsmitteln
Arrangement comprising an electric door lock with an electrical emergency function and its control means

(30) Priorité: 28.02.1995 FR 9502295
(43) Date de publication de la demande: 04.09.1996
(73) Titulaire: YMOS FRANCE, 80970 Sailly-Flibeaucourt (FR)
(72) Inventeur: Girard, Joel, F-80100 Abbeville (FR); Lasson, Olivier, F-80132 Neufmoulin (FR)
(74) Mandataire: Peuscet, Jacques

(56) Documents cités:
- EP-A- 0 115 747
- EP-A- 0 265 728
- FR-A- 2 534 303
- FR-A- 2 633 966
- FR-A- 2 678 018
- GB-A- 2 204 353
- ELECTRONIC DESIGN, vol. 41, no. 25, 2 Décembre 1993 HASBROUCK HEIGHTS, NEW JERSEY US, pages 35-36, XP 000423195 MILT LEONARD 'rf transponder embedded in auto ignition keys stymies car thieves'

## Description

L'invention concerne l'ensemble constitué d'une serrure électrique de portière de véhicule automobile avec fonction de secours électrique et de ses moyens de commande.

FR-A-2 534 303 montre qu'il est connu d'utiliser des serrures de portières de véhicules, qui sont manoeuvrées électriquement par un actionneur, les différents organes de commande agissant simplement sur des interrupteurs qui, eux-mêmes, déterminent l'alimentation électrique de l'actionneur de la serrure.

De telles serrures électriques facilitent, pour l'utilisateur, les opérations de condamnation, de décondamnation et éventuellement de supercondamnation.

Toutefois, en cas de défaillance de l'alimentation électrique de la serrure, celle-ci ne peut plus être actionnée par les moyens normalement destinés à cet effet.

On a donc prévu, bien entendu, des dispositifs de secours permettant, en cas de défaillance de l'alimentation électrique normale, d'actionner la serrure. On a prévu, en particulier, des dispositifs de secours mécaniques permettant la décondamnation et l'ouverture de la portière à l'aide d'un système classique de barillet mécanique et de clé. Cette solution présente l'inconvénient des solutions mécaniques à savoir l'existence d'une tringlerie, et une commande moins agréable pour l'utilisateur qu'une commande électrique.

On a alors proposé un dispositif de secours électrique dans lequel une batterie de secours est susceptible de prendre le relais de l'alimentation normale en cas de défaillance de cette dernière, pour fournir l'énergie électrique nécessaire à l'ouverture de la serrure. La commande manuelle d'une telle serrure reste assumée par une fonction mécanique faisant intervenir un barillet et une clé ; toutefois, cette fonction mécanique se trouve simplifiée car le mouvement communiqué au barillet par l'utilisateur, détenteur de la clé autorisée, n'intervient que pour agir sur un contacteur électrique qui permet l'alimentation de l'actionneur de la serrure.

Un exemple d'une telle serrure est décrit dans la demande de brevet FR2723126 déposée le 27.7.94 et publiée le 02.02.1996.

Il est d'ailleurs à noter que le moyen de commande clé/barillet de la serrure peut être utilisé aussi bien lorsque l'alimention normale est en état que lorsque la batterie de secours a été mise en service. Généralement, en plus de cette commande faisant intervenir une clé, l'utilisateur dispose d'un système de télécommande permettant d'actionner les serrures à distance, mais ce système de télécommande n'est plus opérationnel lorsque l'alimentation normale assurée par la batterie principale du véhicule, est défaillante ; il faut alors avoir nécessairement recours à la commande par clé et barillet. Par contre, lorsque l'alimentation est normale, l'utilisateur peut se servir soit de la télécommande, soit de la clé et du barillet.

Cette dernière solution présente les inconvénients liés à la présence d'un barillet mécanique. Il s'agit de la possibilité offerte à une personne mal intentionnée de réaliser facilement une effraction en forçant mécaniquement le barillet. D'autres inconvénients sont causés par une endurance limitée, un blocage ou un mauvais fonctionnement en cas de gel, une position non souhaitable d'entre-ouverture.

L'invention a pour but, surtout, de fournir un ensemble du genre défini précédemment qui, tout en conservant les avantages existants, ne présente plus, ou à un dégré moindre, les inconvénients évoqués ci-dessus.

Il est souhaitable, en outre, que cet ensemble reste de réalisation simple et robuste, et aussi économique que possible.

FR-A-2633966 décrit un ensemble conforme au préambule de la revendication 1, qui permet, à la suite de l'introduction d'une clé dans une serrure de blocage de direction de commander l'excitation d'un micro-aimant qui permet la rotation de la clé dans la serrure de la position d'arrêt à la position de marche.

Electronic Design, vol. 41, no.25, du 2 décembre 1993 (Hasbrouck Heights, New Jersey, USA) pages 35-36 décrit un transpondeur radiofréquence incorporé dans une clé de démarrage de véhicule et permettant d'activer, soit les relais de la pompe à carburant, soit le contrôleur électronique du moteur.

L'invention consiste à remplacer la fonction mécanique du barillet de portière latérale de véhicule automobile par une fonction électronique associée à la serrure de cette portière, et permettant de s'affranchir des inconvénients évoqués précédemment.

Ainsi, selon l'invention, ce problème est résolu par la revendication 1.

On peut prévoir que le code d'émetteur de l'élément émetteur et le code de référence des moyens de commande associés à la serrure sont des codes qui évoluent au cours du temps selon un même algorithme pré-établi dans les mémoires de l'élément émetteur et des moyens de commande, l'évolution de ces codes s'effectuant automatiquement à chaque émission de code par l'élément émetteur ; avantageusement, le code d'émetteur reçu de l'élément émetteur est stocké en mémoire dans les moyens de commande et, en cas de différence entre le code d'émetteur ainsi stocké et le code de référence mémorisé dans les moyens de commande de la serrure, ledit code de référence est modifié par l'algorithme puis comparé par le moyen de comparaison des moyens de commande avec le code émetteur mémorisé, cette comparaison, si elle constate une différence, générant une nouvelle application de l'algorithme sur le code de référence et ce, jusqu'à ce que n applications de l'algorithme aient été effectuées, n étant un nombre entier prédéterminé, l'arrêt de l'application de l'algorithme se produisant si une concordance est constatée entre le code d'émetteur reçu de l'élément émetteur et le code de référence mémorisé dans les moyens de commande.

Selon l'invention, pour éviter un fonctionnement permanent du circuit émetteur d'ondes porteuses d'alimentation, on prévoit, associé à la serrure, un capteur de présence de l'élément émetteur, de sorte que l'émission des ondes porteuses d'alimentation ne sera effectuée que lorsque la présence de cet élément portatif émetteur sera détectée.

Le capteur de présence est un capteur de proximité, en particulier un capteur à effet Hall, comprenant, côté serrure, un circuit de détection approprié et, côté élément émetteur, un aimant.

Avantageusement, la source d'énergie de secours est une batterie de secours implantée dans la portière à laquelle la serrure est associée. De préférence, la batterie de secours est implantée dans la serrure.

L'alimentation électrique de la serrure peut être pilotée par un circuit électronique implanté dans la serrure ou dans la portière à laquelle la serrure est associée, ledit circuit recevant, d'une part, l'énergie électrique de la batterie du véhicule et, d'autre part, les instructions fournies par les organes de commande associés à la serrure pilotée par ledit circuit. Dans le cas d'un véhicule comportant une pluralité de serrures électriques de portières, le susdit circuit électronique d'une serrure est relié à au moins une autre serrure électrique de portière du véhicule par un connecteur pour assurer la transmission des informations relatives à l'état de condamnation ou de décondamnation de la serrure, vers ladite autre serrure électrique de portière.

L'invention concerne également un équipement formé par plusieurs ensembles de serrures électriques tels que définis précédemment, pour les portières d'un même véhicule, cet équipement comportant un dispositif de télécommande classique, fonctionnant avec l'alimentation normale assurée par la batterie principale du véhicule, couplé à la commande assurée au niveau d'au moins une serrure électrique par le moyen récepteur d'ondes porteuses d'un code et l'élément émetteur associé, propre à cette serrure.

L'invention consiste, mises à part les dispositions exposées ci-dessus, en un certain nombre d'autres dispositions dont il sera plus explicitement question ci-après à propos d'un exemple de réalisation décrit avec référence aux dessins ci-annexés, mais qui n'est nullement limitatif.

La figure 1 de ces dessins représente, schématiquement, le moyen récepteur d'ondes porteuses d'un code et l'élément émetteur portatif, associé à ce moyen récepteur, d'un ensemble de serrure électrique de portière selon l'invention.

La figure 2 est un schéma d'un équipement pour quatre portières d'un véhicule comportant une télécommande.

La figure 3, enfin, représente le schéma électronique d'un module associé à l'une des serrures de l'équipement de la figure 2.

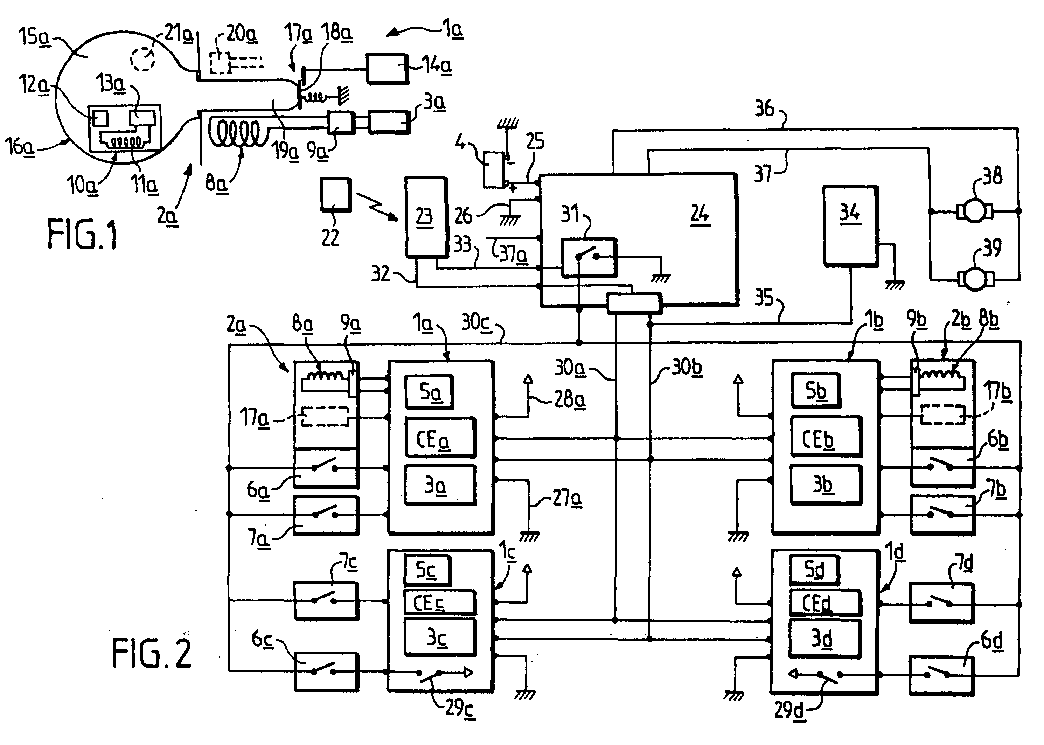

En se reportant à la figure 2, on peut voir représenté schématiquement un ensemble constitué d'une serrure électrique la de portière de véhicule automobile associé à ses moyens de commande 2a. L'ouverture de la serrure est assurée électriquement par la manoeuvre d'un actionneur 3a alimenté, en fonctionnement normal, par la batterie 4 du véhicule. Une source d'énergie de secours 5a, constituée par une batterie auxiliaire ou par des piles est prévue pour être mise en action par les moyens de commande 2a en cas de dysfonctionnement de l'alimentation électrique fournie par la batterie principale 4. Cette batterie de secours 5a est une batterie implantée dans la portière sur laquelle la serrure 1a est montée. De préférence, la batterie de secours 5a est implantée dans la serrure 1a.

Les moyens de commande 2a sont propres à la serrure 1a et sont donc implantés soit dans la portière sur laquelle est montée cette serrure ou implantés au moins en partie dans la serrure.

Ces moyens de commande 2a comprennent, d'une manière connue, comme illustré sur la figure 2, un interrupteur 6a commandé par la poignée intérieure de la portière, et un interrupteur 7a commandé par la poignée extérieure de la portière.

Selon l'invention, les moyens de commande 2a comprennent, en outre, pour chaque serrure, un moyen 8a récepteur d'ondes porteuses d'un code et un moyen 9a de comparaison du code reçu avec un code de référence en mémoire.Le moyen récepteur 8a a été représenté avec son bobinage.

Un élément émetteur portatif 10a (voir figure 1) est associé au moyen récepteur 8a et est destiné à être manipulé par l'utilisateur qui peut provoquer la condamnation ou la décondamnation de la serrure 1a en envoyant sur le moyen récepteur 8a, à l'aide de l'élément portatif 10a, le code de référence. Lorsque le code correct est reçu par le moyen récepteur 8a, le moyen de comparaison 9a fournit sur sa sortie un signal permettant la commande de l'actionneur 3a, pour assurer la condamnation ou la décondamnation de la serrure.

L'élément portatif émetteur 10a est avantageusement du type "transpondeur" et est dépourvu de source d'énergie propre. Le transpondeur comprend un circuit d'émission 11a, une mémoire codée 12a dans laquelle est écrit le code de référence, un circuit électronique 13a et un circuit récepteur d'ondes porteuses d'alimentation. Ce circuit récepteur peut être confondu avec le circuit d'émission 11a qui fonctionnera d'abord en récepteur pour stocker une énergie suffisante puis en émetteur en utilisant l'énergie préalablement stockée. Dans un tel système, le moyen récepteur d'ondes 8a associé à la serrure la comporte un circuit 14a émetteur d'ondes radio porteuses d'alimentation propres à fournir au transpondeur 10a l'énergie nécessaire pour qu'il puisse émettre les ondes porteuses de code à destination du moyen récepteur 8a.

Le bobinage du circuit émetteur 14a peut être différent de celui du récepteur 8a, ou confondu avec celui-ci.

Il est à noter que l'alimentation électrique du moyen récepteur 8a et du moyen émetteur 14a est assurée de la même manière que pour l'actionneur 3a, c'est-à-dire que lorsque la batterie principale est en état normal de fonctionnement, c'est elle qui assure cette alimentation électrique. En cas de défaillance de la batterie principale, l'alimentation électrique des circuits 8a et 14a est assurée par la batterie de secours implantée dans la portière ou dans la serrure.

Le transpondeur 10a est un composant de quelques millimètres carrés de surface et peut facilement être incorporé dans une platine 15a d'une clé 16a, comme illustré sur la figure 1, ou sur une carte du type carte de crédit.

Pour éviter une consommation d'énergie électrique inutile par le moyen émetteur 14a, on prévoit, dans l'ensemble de serrure électrique, un capteur 17a de présence de l'élément portatif émetteur 10a.

Dans l'exemple de réalisation de la figure 1, le capteur de présence 17a est du type mécanique ; il comprend, côté serrure, un interrupteur ou contacteur 18a, propre à commander l'alimentation électrique du circuit 14a lorsqu'il est fermé. Ce contacteur 18a est placé au fond d'un logement ménagé dans la portière d'une manière semblable au canal d'un barillet de portière. Du côté de l'élément émetteur 10a, porté par la clé 16a, le capteur de présence 17a comprend une tige de clé 19a, dépourvue de toute variation mécanique. La tige de clé 19a est introduite dans le logement dont le fond est équipé du contacteur 18a et, en fin d'introduction, l'extrémité de la tige 19a vient fermer le contacteur 18a pour assurer l'alimentation électrique du circuit émetteur 14a.

Le capteur de présence 17a peut être réalisé de manière différente, par exemple sous la forme d'un capteur de proximité comme représenté en tirets sur la figure 1. Le capteur de présence comporte encore un élément 20a côté portière et serrure, et un élément 21a côté élément portatif. Dès que l'élément 21a se trouve à une distance suffisamment faible de l'élément 20a, ce dernier fournit un signal commandant l'alimentation du circuit 14a. L'élément 20a peut être un capteur à effet Hall tandis que l'élément 21a est un aimant incorporé dans la platine 15a de clé pour l'exemple considéré.

Le fonctionnement de l'ensemble de serrure électrique comportant les moyens de commande 2a de la figure 1 résulte immédiatement de la description qui précède.

Il suffit d'approcher suffisamment l'élément émetteur 10a de l'élément récepteur 8a pour commander la condamnation ou la décondamnation de la serrure. Dans le cas où le capteur de présence est constitué par le couple contacteur 18a/tige 19a, l'utilisateur doit introduire la tige dans le logement associé au contacteur 18a. Comme déjà expliqué, la fermeture du contacteur 18a permet le fonctionnement du circuit 14a et donc l'alimentation en énergie du moyen émetteur 10a qui peut envoyer au moyen récepteur 8a le code écrit dans la mémoire 12a de sorte que l'actionneur 3a de la serrure est commandé.

Lorsque l'utilisateur quitte le véhicule, il effectue cette action, afin de verrouiller la portière par condamnation de la serrure.

Lorsque l'utilisateur revient à son véhicule, il lui faut renouveler l'action précédemment décrite afin de déverrouiller la portière.

Dans le cas où le capteur de présence est du type capteur de proximité, la manoeuvre est encore plus simple puisque l'utilisateur doit simplement approcher l'élément émetteur 10a de la portière, sans avoir à introduire mécaniquement une tige de clé dans un logement.

Ainsi, selon l'invention, la fonction mécanique du barillet de portière est remplacée par une fonction électronique qui permet de s'affranchir de tous les problèmes et inconvénients connus du barillet mécanique.

Bien entendu, la solution de l'invention, peut être couplée à un système de télécommande classique schématiquement représenté sur la figure 2 avec un boîtier 22 de télécommande et un récepteur 23 installé dans le véhicule. Le boîtier de télécommande 22, porté par l'utilisateur, permet, à distance, de transmettre des instructions de commande au récepteur 23 associé à une unnité centralisée 24 pour la commande des quatre serrures électriques à savoir les deux serrures électriques avant 1a, 1b et les deux serrures électriques arrière 1c, 1d. Cette unité centralisée 24 est reliée directement à la batterie 4 du véhicule par les connexions 25, 26. Ainsi, en cas de défaillance de cette batterie, l'unité centralisée 24 et donc la télécommande 22-23 ne peut plus commander l'actionnement des serrures 1a-1d. La commande de ces serrures reste possible avec les moyens de commande 2a (comprenant les moyens 8a, 9a, 10a) décrits précédemment.

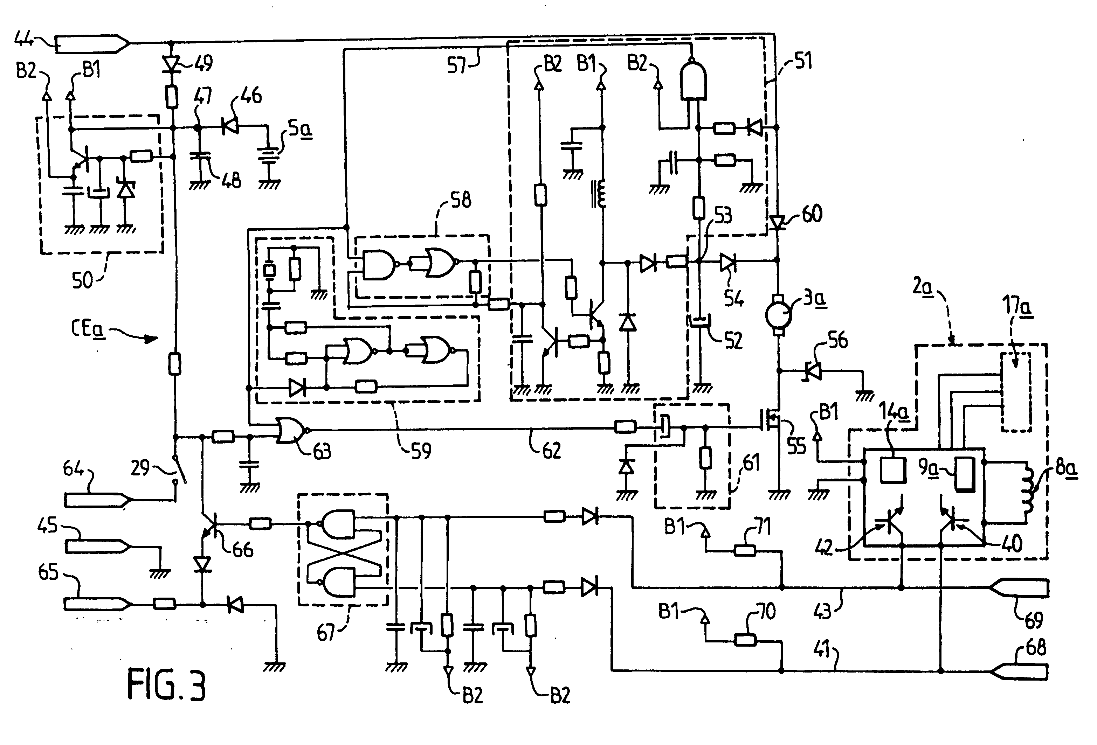

Chacune des quatre serrures électriques 1a-1d du schéma de la figure 2 incorpore une batterie de secours et un circuit électronique propre à cette serrure. Ce circuit électronique regroupe,comme décrit dans la demande de brevet français n° 94-09297 déposée le 27.7.94, une interface électronique associée à la batterie de secours, pour détecter une défaillance de la batterie principale et pour mise en service de la batterie de secours, et un module électronique permettant le branchement direct de chaque serrure de portière sur l'alimentation électrique de la batterie du véhicule, par exemple par raccordement sur un fil qui alimente un lève-glace incorporé dans la portière. Ce circuit électronique est schématisé pour chaque serrure par un rectangle et désigné respectivement par CEa-CEd. Il est représenté plus en détail sur la figure 3. Les quatre serrures sont pratiquement identiques de telle sorte qu'il suffira de décrire les éléments de la serrure 1a. Les éléments relatifs aux autres serrures s'en déduisent immédiatement puisqu'ils portent les mêmes chiffres de référence suivis de la lettre b, c ou d à la place de a.

Le branchement de la serrure 1a, par l'intermédiaire du fil alimentant le lève-glace de la portière, a été schématisé par les connexions 27a en direction de la masse et 28a en direction du pôle positif de la batterie.

Les deux serrures avant 1a, 1b sont associées chacune à trois organes de commande décrits pour la serrure 1a. Il s'agit des interrupteurs 6a, 7a correspondant respectivement à la poignée intérieure et à la poignée extérieure de la portière, et des moyens de commande supplémentaires de l'invention constitués par le moyen récepteur 8a, conjugué avec le moyen de comparaison 9a, et le capteur de présence 17a.

Les deux serrures arrière 1c, 1d sont associées à deux interrupteurs 6c, 6d et 7c, 7d correspondant à la poignée intérieure et à la poignée extérieure de portière. En outre, chaque serrure est associée à un interrupteur 29c, 29d qui est en série avec l'interrupteur 6c, 6d des poignées intérieures et qui peut être commandé indépendamment. Cet interrupteur 29c, 29d correspond à la "condamnation enfant", c'est-à-dire à une interdiction d'ouverture des portières arrière à partir de la poignée intérieure.

Les quatre serrures 1a-1d du véhicule sont reliées entre elles par un connecteur susceptible de transporter les informations relatives à l'état de condamnation, de décondamnation ou de super-condamnation des serrures. Dans le cas présent, le connecteur comporte trois fils 30a, 30b, 30c. Le fil 30a transporte l'information relative à la condamnation ; le fil 30b transporte l'information relative à la décondamnation, tandis que le fil 30c transporte l'information relative à la super-condamnation. Cette super-condamnation est schématisée sur la figure 2 par un interrupteur 31 en série avec les interrupteurs associés aux poignées intérieures et extérieures de portières. Lorsque l'interrupteur 31 est ouvert, aucune des poignées de portières ne peut donner une instruction d'ouverture aux serrures électriques. L'interrupteur 31 de super-condamnation est disposé dans l'unité centralisée 24.

Les instructions reçues par le récepteur 23 de télécommande sont de deux types : d'une part, les instructions de condamnation/décondamnation qui transitent par une connexion 32 vers les divers ensembles de serrures électriques et, d'autre part, les instructions de super-condamnation qui transitent par la connexion 33 vers l'interrupteur 31.

Un détecteur de choc 34 est susceptible d'envoyer une information de décondamnation suivant une liaison 35 avec le fil 30b.

L'unité centralisée 24 est, en outre, reliée par des connexions 36, 37 à deux actionneurs annexes 38, 39 associés respectivement aux serrures électriques du coffre et de la trappe à essence du véhicule. Enfin l'unité centralisée 24 peut recevoir des informations complémentaires telles que, par exemple, celle figurée par la connexion 37a en provenance d'un circuit d'alarme ou analogue.

L'équipement formé par les quatre ensembles de serrures électriques et de leurs moyens de commande illustrés par la figure 2 permet d'actionner toutes les serrures à partir d'une seule à l'aide des moyens de commande tels, que 2a, 8a, 9a, décrits précédemment. Cette commande de la condamnation/décondamnation à l'aide des moyens 2a, 8a, 9a, s'effectue au niveau d'une des serrures électriques avant équipée de sa batterie de secours. Cette commande n'est donc pas compromise par une défaillance de la batterie principale, ce qui n'est pas le cas pour la télécommande 22-23 faisant appel à l'unité centralisée 24.

En outre, le fait que les batteries de secours soient incorporées dans les portières ou dans les serrures constitue une sécurité supplémentaire en cas d'accident car la probabilité pour que les quatre portières soient simultanément détériorées est plus faible que pour une unité de secours centralisée. L'utilisation comme source d'alimentation des serrures électriques du fil d'alimentation du lève-glace permet de réduire les liaisons de transport d'énergie.

En se reportant à la figure 3 on peut voir le schéma détaillé du circuit électronique associé à chacune des serrures électriques 1a-1d de l'équipement de la figure 2. Ce circuit électronique diffère essentiellement du circuit déjà représenté et décrit dans la demande de brevet français n° 94-09297 par les moyens de commande 2a, 8a, 9a, déjà décrits à propos de la figure 1 et illustrés sur la partie inférieure droite de la figure 3.

Le moyen récepteur 8a avec sa bobine a été représenté, ainsi que le moyen de comparaison 9a et le capteur de présence 17a. Lorsque la présence du transpondeur 10a à proximité de la serrure est détectée, l'alimentation d'une bobine énergétisante (qui peut être la même que la bobine de réception des moyens 8a) est assurée. Le moyen récepteur 8a fonctionne alors en émetteur avec son circuit 14a et envoie des ondes (par exemple ondes radio) d'alimentation en énergie, notamment une émission en créneau fournie par une horloge. Le transpondeur 10a recueille ces ondes d'alimentation en énergie et peut ensuite fonctionner en émetteur pour transmettre son code. S'il s'agit du transpondeur 10a associé à la serrure, la comparaison effectuée par le moyen 9a entre le code reçu et le code de référence en mémoire dans la serrure indiquera la concordance des codes, et une instruction de condamnation ou de décondamnation sera fournie sur la sortie des moyens de comparaison 9a. L'instruction de condamnation est envoyée par l'intermédiaire d'un transistor 40 à collecteur ouvert sur une ligne 41 de commande de condamnation. L'instruction de décondamnation est envoyée par l'intermédiaire d'un autre transistor 42 à collecteur ouvert sur une ligne 43 de commande de décondamnation. Le module des moyens de commande 2a donne une instruction de condamnation ou de décondamnation alternativement, en basculant, de l'une sur l'autre à chaque commande assurée par le transpondeur 10a.

La description d'ensemble du schéma de la figure 3 ne sera effectuée que succinctement, car il suffit de se reporter à la demande de brevet français n° 94-09297 pour disposer de la description détaillée.

Le circuit électronique comporte un interrupteur 29 associé à la "condamnation enfant". Le circuit de la figure 3 est relié au pôle positif de la batterie par la borne 44 et au pôle négatif, c'est-à-dire à la masse, par la borne 45. La batterie de secours associée à ce circuit et à la serrure correspondante est schématiquement représentée en 5a. Il s'agit d'une batterie de 9 volts, c'est-à-dire d'une tension inférieure à celle de la batterie principale, qui est reliée par une diode 46 au point 47 du circuit, un condensateur 48 étant branché en parallèle pour l'antiparasitage. Avec ce montage, la batterie de secours 5a ne fournira son énergie que si la tension sur la borne 44 devient inférieure à un seuil de 9 volts environ. La tension fournie par la batterie de secours 5a au point 47 permettra d'alimenter par la borne B1 les éléments du circuit pour assurer le fonctionnement de la serrure électrique en cas de panne de l'alimentation due à la batterie. Le point 47 est relié par une résistance et une diode 49 à la borne 44. Un sous-ensemble 50 est prévu pour fournir une tension stabilisée sur une borne B2 pour alimenter les différents composants électroniques du circuit.

Le circuit électronique comprend un sous-ensemble 51 propre à détecter un dysfonctionnement de la batterie du véhicule, par exemple lorsque sa tension tombe au-dessous d'un seuil prédéterminé, et à assurer la charge d'un condensateur 52, de capacité suffisante, à partir de la batterie de secours 5a, sous une tension donnée, par exemple de 20 volts. Le condensateur 52, destiné à assurer l'alimentation de secours de l'actionneur 3a, est relié à une borne 53 de sortie du sous-ensemble 51 et à la masse. La borne 53 est reliée, par l'intermédiaire d'une diode 54, à une borne de l'actionneur 3a constitué par un moteur électrique à courant continu commandé par un transistor MOS 55, protégé par une diode Zener 56.

Lorsque le sous-ensemble 51 détecte une tension insuffisante de la batterie du véhicule, et une tension insuffisante aux bornes du condensateur 52, ce sous-ensemble 51 envoie, sur sa sortie 57, un signal qui commande la mise en action d'un multivibrateur 58 pour la charge du condensateur 52. De plus, le signal sur la sortie 57 commande la mise en action d'un circuit d'alarme sonore 59 destiné à avertir l'utilisateur du dysfonctionnement de la batterie du véhicule. Lorsque la tension aux bornes du condensateur 52 a atteint une valeur suffisante, le moteur 3a est alimenté par ce condensateur.

Lorsque la tension d'alimentation de la batterie est normale, l'alimentation du moteur 3a s'effectue à travers une diode 60.

Un circuit de temporisation 61 est prévu sur la base du transistor MOS pour limiter le temps d'alimentation du moteur 3a. Le transistor 55 est commandé par des signaux arrivant sur une ligne 62 branchée sur la sortie d'une porte "NON OU" 63 dont l'une des entrées est reliée à la ligne 57 alors que l'autre entrée est reliée aux interrupteurs de poignées intérieure et extérieure de portière arrivant respectivement sur des bornes 64 et 65. L'interrupteur 29 de sécurité "condamnation enfant" est en série sur la ligne de la borne 64 reliée à l'interrupteur de poignée intérieure. Le circuit ainsi réalisé permet de ne pas alimenter le moteur 3a tant que le condensateur 52 n'est pas suffisamment chargé.

La liaison électrique entre la borne 65 de contact de portière extérieure et l'entrée de la porte 63 s'effectue par l'intermédiaire d'un transistor 66 commandé par la sortie d'une bascule de type "RS" 67 dont les deux entrées sont reliées respectivement aux lignes 41, 43 commandées par les transistors 40, 42 eux-mêmes commandés par le moyen récepteur 8a de l'invention.

Si le transistor 42 associé à la ligne 43 de décondamnation, suite à une instruction reçue par le moyen récepteur 8a à partir du transpondeur 10a, met momentanément à la masse la ligne 43, la sortie de la bascule 67 passe à l'état haut, ce qui permet la commande du moteur 3a par la poignée extérieure.

Si, au contraire, la dernière action sur le moyen récepteur 8a a provoqué une mise à la masse momentanée par le transistor 40, relié à la ligne 41, l'autre entrée de la bascule 67 a été mise momentanément à la masse et cette bascule a pris l'état inverse, c'est-à-dire que sa sortie est à l'état bas, ce qui empêche la commande du moteur 3a par la poignée extérieure, et ce qui correspond à la condamnation de la serrure.

Les informations de condamnation et décondamnation sur les lignes 41 et 43 sont transmises aux autres serrures du véhicule respectivement par les bornes 68, 69. La bascule 67 joue le rôle d'une mémoire qui conserve, sur sa sortie, un état correspondant au dernier ordre de condamnation ou de décondamnation fourni par le moyen récepteur 8a.

En l'absence de toute mise à la masse sur les lignes 41, 43, les deux entrées de la bascule 67 sont au niveau haut en raison de la connexion des résistances 70, 71 respectivement sur l'alimentation de secours 5a.

Quel que soit le mode de réalisation, la condamnation/décondamnation assurée au niveau de la serrure par le couple moyen récepteur 8a, 9a/transpondeur 10a, selon l'invention, permet de s'affranchir des inconvénients des barillets mécaniques à parties rotatives, tout en conservant une sécurité vis à vis d'une défaillance de la batterie 4 du véhicule et/ou de l'unité centralisée 24.

## Revendications

1. Ensemble constitué d'une serrure de véhicule automobile associée à ses moyens de commande, lesdits moyens de commande (2a) associés à la serrure (1a) comportant un moyen récepteur (8a) d'ondes porteuses d'un code, ledit moyen récepteur étant associé à un élément portatif émetteur d'ondes porteuses d'un code (10a), destiné à être manipulé par un utilisateur, ledit élément portatif émetteur (10a) pouvant envoyer sur le moyen récepteur (8a) un code d'émetteur, lesdits moyens de commande comportant un moyen de comparaison (9a) du code reçu par ledit moyen récepteur avec un code de référence en mémoire pour provoquer la commande de la serrure (1a) lorsque ledit code reçu est identique au code de référence, l'élément portatif émetteur étant du type connu sous le nom "transpondeur" (10a), dépourvu de source d'énergie propre, et comprenant un circuit d'émission (11a), une mémoire (12a) stockant un code d'émetteur, un circuit électronique (13a) pour lecture du code d'émetteur stocké en mémoire et communication dudit code au circuit d'émission (11a) et un circuit récepteur d'ondes porteuses d'alimentation, ledit moyen récepteur (8a) d'ondes comportant un circuit (14a) émetteur d'ondes porteuses d'alimentation pour fournir l'énergie nécessaire au circuit du transpondeur et permettre l'émission du code d'émetteur par ce transpondeur, lesdits moyens de commande comportant un capteur de présence (17a) de l'élément émetteur (10a) associé à ladite serrure (1a), ledit circuit émetteur étant apte à effectuer l'émission des ondes porteuses d'alimentation uniquement lorsque la présence de l'élément émetteur (10a) est détectée par ledit capteur de présence, **caractérisé par le fait que** ladite serrure est une serrure électrique de portière incluant un actionneur (3a) alimenté par la batterie du véhicule et apte à être manoeuvré électriquement pour ouvrir ladite serrure, ladite serrure étant, en cas de dysfonctionnement de l'alimentation électrique fournie par la batterie, susceptible d'être ouverte grâce à l'alimentation électrique fournie par une source d'énergie de secours constituée d'une batterie de secours (5a) implantée dans la portière à laquelle la serrure (1a) est associée, ledit capteur de présence étant un capteur de proximité agencé de manière à détecter une simple approche de la portière par l'élément émetteur sans introduction mécanique d'une tige de clé dans un logement.

2. Ensemble selon la revendication 1, **caractérisé par le fait que** l'élément émetteur (10a) et les moyens de commande (2a) comportent dans leurs mémoires un même algorithme pré-établi selon lequel le code d'émetteur de l'élément émetteur (10a) et le code de référence des moyens de commande (2a) associés à la serrure (1a) sont des codes, qui évoluent au cours du temps, l'évolution de ces codes s'effectuant automatiquement à chaque émission de code par l'élément émetteur (10a).

3. Ensemble selon la revendication 2, **caractérisé par le fait que** les moyens de commande (2a) sont aptes à stocker dans leur mémoire le code d'émetteur reçu de l'élément émetteur (10a) et, en cas de différence entre le code d'émetteur ainsi stocké et le code de référence mémorisé dans les moyens de commande de la serrure, à modifier ledit code de référence par l'algorithme puis à comparer ledit code de référence par le moyen de comparaison (9a) des moyens de commande (2a) avec le code émetteur mémorisé, les moyens de commande (2a) étant aptes à générer une nouvelle application de l'algorithme sur le code de référence si cette comparaison constate une différence, et ce, jusqu'à ce que n applications de l'algorithme aient été effectuées, n étant un nombre entier prédéterminé, l'arrêt de l'application de l'algorithme se produisant si une concordance est constatée entre le code d'émetteur reçu de l'élément émetteur (10a) et le code de référence mémorisé dans les moyens de commande (2a).

4. Ensemble selon l'une des revendications 1 à 3, **caractérisé par le fait que** le capteur de proximité est un capteur à effet Hall, comprenant, côté serrure, un circuit de détection approprié (20a) et, côté élément émetteur, un aimant (21a).

5. Ensemble selon l'une des revendications 1 à 4, **caractérisé par le fait que** la batterie de secours (5a) est implantée dans la serrure (1a).

6. Ensemble selon l'une des revendications 1 à 5, **caractérisé par le fait que** l'alimentation électrique de la serrure (1a) est pilotée par un cicuit électronique (CEa) implanté dans la serrure ou dans la portière à laquelle la serrure est associée, ledit circuit (CEa) recevant, d'une part, l'énergie électrique de la batterie (4) du véhicule et, d'autre part, les instructions fournies par les organes de commande (6a, 7a, 8a, 9a) associés à la serrure pilotée par ledit circuit.

7. Ensemble selon la revendication 6 pour un véhicule comportant une pluralité de serrures électriques de portières, **caractérisé par le fait que** le susdit circuit électronique (CEa) d'une serrure (1a) est relié à au moins une autre serrure électrique de portière du véhicule par un connecteur (30a, 30b, 30c) pour assurer la transmission des informations relatives à l'état de condamnation ou de décondamnation de la serrure (1a), vers ladite autre serrure électrique de portière.

8. Equipement formé par plusieurs ensembles de serrures électriques selon l'une des revendications 1 à 7, pour les portières d'un même véhicule, **caractérisé par le fait qu'**il comporte un dispositif de télécommande classique (22, 23, 24) fonctionnant avec l'alimentation normale assurée par la batterie principale du véhicule, couplé à la commande assurée au niveau d'au moins une serrure électrique (1a) par le moyen récepteur (8a) d'ondes porteuses d'un code et l'élément émetteur (10a) associé, propre à cette serrure.

## Patentansprüche

1. Einheit, bestehend aus einem Kraftfahrzeugschloss, das deren Steuermitteln zugeordnet ist, wobei die dem Schloss (1a) zugeordneten Steuermittel (2a) ein Empfangsmittel (8a) für Codeträgerwellen enthalten, wobei das Empfangsmittel einem tragbaren Sendeelement (10a) für Codeträgerwellen zugeordnet ist, das dazu bestimmt ist, von einem Benutzer bedient zu werden, wobei das tragbare Sendeelement (10a) einen Sendercode zum Empfangsmittel (8a) senden kann, wobei die Steuermittel ein Vergleichsmittel (9a) zum Vergleichen des vom Empfangsmittel empfangenen Codes mit einem eingespeicherten Referenzcode enthalten, um die Ansteuerung des Schlosses (1a) dann zu bewirken, wenn der empfangene Code identisch mit dem Referenzcode ist, wobei das tragbare Sendeelement vom unter der Bezeichnung "Transponder" (10a) bekannten Typ ist, keine eigene Energiequelle hat und eine Sendeschaltung (11a), einen einen Sendecode speichernden Speicher (12a), eine elektronische Schaltung (13a) zum Auslesen des im Speicher abgelegten Sendecodes und zum Mitteilen des Codes an die Sendeschaltung (11a) und eine Empfangsschaltung für Versorgungsträgerwellen enthält, wobei das Wellenempfangsmittel (8a) eine Sendeschaltung (14a) für Versorgungsträgerwellen enthält, um die für die Transponderschaltung erforderliche Energie zu liefern und das Aussenden des Sendecodes über diesen Transponder zu ermöglichen, wobei die Steuermittel einen Anwesenheitssensor (17a) für das Sendeelement (10a) enthalten, der dem Schloss (1a) zugeordnet ist, wobei die Sendeschaltung das Senden der Versorgungsträgerwellen nur dann durchführen kann, wenn das Vorhandensein des Sendeelements (10a) vom Anwesenheitssensor erfasst wird, **dadurch gekennzeichnet, dass** das Schloss ein elektrisches Türschloss ist, das einen Aktuator (3a) umfasst, der von der Fahrzeugbatterie gespeist wird und elektrisch betätigt werden kann, um das Schloss zu öffnen, wobei im Falle einer Fehlfunktion der von der Batterie gelieferten Stromversorgung das Schloss aufgrund der Stromversorgung geöffnet werden kann, die von einer Notenergiequelle geliefert wird, welche aus einer Notbatterie (5a) besteht, die in die Tür eingesetzt ist, welcher das Schloss (1a) zugeordnet ist, wobei der Anwesenheitssensor ein Näherungssensor ist, der so angeordnet ist, dass er eine einfache Annäherung des Sendeelements an die Tür ohne mechanisches Einführen eines Schlüsselschafts in eine Aufnahme erfasst.

2. Einheit nach Anspruch 1, **dadurch gekennzeichnet, dass** das Sendeelement (10a) und die Steuermittel (2a) in ihren Speichern einen gleichen vorerstellen Algorithmus enthalten, nach dem der Sendecode des Sendeelements (10a) und der Referenzcode der dem Schloss (1a) zugeordneten Steuermittel (2a) Codes sind, die sich mit der Zeit verändern, wobei die Veränderung dieser Codes bei jedem Aussenden des Codes von dem Sendeelement (10a) automatisch erfolgt.

3. Einheit nach Anspruch 2, **dadurch gekennzeichnet, dass** die Steuermittel (2a) in ihrem Speicher den vom Sendeelement (10a) empfangenen Sendecode einspeichern können und im Falle einer Abweichung zwischen dem so gespeicherten Sendecode und dem in den Steuermitteln des Schlosses gespeicherten Referenzcode den Referenzcode durch den Algorithmus verändern und dann den Referenzcode über das Vergleichsmittel (9a) der Steuermittel (2a) mit dem gespeicherten Sendecode vergleichen können, wobei die Steuermittel (2a) eine erneute Anwendung des Algorithmus auf den Referenzcode bewirken können, wenn dieser Vergleich eine Abweichung aufzeigt, und zwar solange, bis n Anwendungen des Algorithmus erfolgt sind, wobei n eine vorbestimmte ganze Zahl ist, wobei das Abbrechen der Anwendung des Algorithmus dann erfolgt, wenn zwischen dem von dem Sendeelement (10a) empfangenen Sendecode und dem in den Steuermitteln (2a) gespeicherten Referenzcode eine Übereinstimmung festgestellt wird.

4. Einheit nach einem der Ansprüche 1 bis 3, **dadurch gekennzeichnet, dass** der Näherungssensor ein Sensor mit Hall-Effekt ist, der auf der Seite des Schlosses eine geeignete Erfassungsschaltung (20a) und auf der Seite des Sendeelements ein Magnet (21a) enthält.

5. Einheit nach einem der Ansprüche 1 bis 4, **dadurch gekennzeichnet, dass** die Notbatterie (5a) in das Schloss (1a) eingesetzt ist.

6. Einheit nach einem der Ansprüche 1 bis 5, **dadurch gekennzeichnet, dass** die Stromversorgung des Schlosses (1a) über eine elektronische Schaltung (CEa) angesteuert wird, die in das Schloss oder in die Tür eingesetzt ist, der das Schloss zugeordnet ist, wobei die Schaltung (CEa) einerseits die elektrische Energie der Fahrzeugbatterie (4) und andererseits die von den Steuerorganen (6a, 7a, 8a, 9a) gelieferten Anweisungen empfängt, die dem von der Schaltung angesteuerten Schloss zugeordnet sind.

7. Einheit nach Anspruch 6 für ein Fahrzeug mit einer Mehrzahl von elektrischen Türschlössern, **dadurch gekennzeichnet, dass** die elektronische Schaltung (CEa) eines Schlosses (1a) über einen Steckverbinder (30a, 30b, 30c) mit zumindest einem weiteren elektrischen Türschloss des Fahrzeugs verbunden ist, um die Übertragung der Informationen über den Aktivierungs- bzw. Deaktivierungszustand des Schlosses (1a) zu dem weiteren elektrischen Türschloss zu gewährleisten.

8. Ausstattung, gebildet aus mehreren Einheiten von elektrischen Schlössern nach einem der Ansprüche 1 bis 7 für die Türen eines selben Fahrzeugs, **dadurch gekennzeichnet, dass** sie eine klassische Fernbedienungsvorrichtung (22, 23, 24) enthält, die mit der normalen Stromversorgung betrieben wird, welche durch die Hauptbatterie des Fahrzeugs gewährleistet wird, und mit der Steuerung gekoppelt ist, die im Bereich zumindest eines elektrischen Schlosses (1a) über das Empfangsmittel (8a) für Codeträgerwellen und das zugeordnete Sendeelement (10a) gewährleistet wird, das diesem Schloss eigen ist.

## Claims

1. Assembly consisting of a motor vehicle lock associated with its control means, the said control means (2a) associated with the lock (1a) comprising a receiver means (8a) for waves carrying a code, the said receiver means being associated with a portable transmitter element for waves carrying a code (10a) intended to be manipulated by a user, the said portable transmitter element (10a) being able to despatch to the receiver means (8a) a transmitter code, the said control means comprising a means of comparison (9a) of the code received by the said receiver means with a reference code in memory so as to cause the commanding of the lock (1a) when the said code received is identical to the reference code, the portable transmitter element being of the type known by the name "transponder" (10a) , devoid of its own energy source, and comprising a transmission circuit (11a) , a memory (12a) storing a transmitter code, an electronic circuit (13a) for reading of the transmitter code stored in memory and communication of the said code to the transmission circuit (11a), and a receiver circuit for waves carrying a power supply, the said receiver means (8a) for waves comprising a transmitter circuit (14a) for waves carrying a power supply so as to provide the necessary energy to the circuit of the transponder and allow the transmission of the transmitter code by this transponder, the said control means comprising a sensor of presence (17a) of the transmitter element (10a) associated with the said lock (1a), the said transmitter circuit being able to perform the transmission of the waves carrying a power supply only when the presence of the transmitter element (10a) is detected by the said presence sensor, **characterized in that** the said lock is an electric door lock including an actuator (3a) powered by the battery of the vehicle and able to be manoeuvred electrically so as to open the said lock, the said lock being, in the case of malfunctioning of the electrical power supply provided by the battery, able to be opened by virtue of the electrical power supply provided by a backup energy source consisting of a backup battery (5a) installed in the door with which the lock (1a) is associated, said presence sensor being a proximity sensor devised in such a way as to detect a simple approach to the door by the transmitter element without mechanical introduction of a key stem into a housing.

2. Assembly according to Claim 1, **characterized in that** the transmitter element (10a) and the control means (2a) comprise in their memories one and the same preset algorithm according to which the transmitter code of the transmitter element (10a) and the reference code of the control means (2a) associated with the lock (1a) are codes, which alter over time, the alteration of these codes being performed automatically with each transmission of code by the transmitter element (10a).

3. Assembly according to Claim 2, **characterized in that** the control means (2a) are able to store in their memory the transmitter code received from the transmitter element (10a) and, in the case of a difference between the transmitter code thus stored and the reference code stored in the means of control of the lock, to modify the said reference code by the algorithm then to compare the said reference code by the means of comparison (9a) of the means of control (2a) with the transmitter code stored, the control means (2a) being able to generate a new application of the algorithm to the reference code if this comparison finds a difference, and to do so until n applications of the algorithm have been performed, n being a predetermined integer, the stopping of the application of the algorithm occurring if a match is found between the transmitter code received from the transmitter element (10a) and the reference code stored in the control means (2a).

4. Assembly according to one of Claims 1 to 3, **characterized in that** the proximity sensor is a Hall-effect sensor, comprising, lock side, an appropriate detection circuit (20a) and, transmitter element side, a magnet (21a).

5. Assembly according to one of Claims 1 to 4, **characterized in that** the backup battery (5a) is installed in the lock (1a).

6. Assembly according to one of Claims 1 to 5, **characterized in that** the electrical power supply to the lock (1a) is commanded by an electronic circuit (CEa) installed in the lock or in the door with which the lock is associated, the said circuit (CEa) receiving, on the one hand, the electrical energy from the battery (4) of the vehicle and, on the other hand, instructions provided by the control members (6a, 7a, 8a, 9a) associated with the lock commanded by the said circuit.

7. Assembly according to Claim 6 for a vehicle comprising a plurality of electric door locks, **characterized in that** the aforesaid electronic circuit (CEa) of a lock (1a) is linked to at least one other electric door lock of the vehicle by a connector (30a, 30b, 30c) so as to ensure the forwarding of the information pertaining to the state of locking or of unlocking of the lock (1a), to the said other electric door lock.

8. Equipment formed by several electric lock assemblies according to one of Claims 1 to 7, for the doors of one and the same vehicle, **characterized in that** it comprises a conventional remote control device (22, 23, 24) operating with the normal power supply afforded by the main battery of the vehicle, coupled with the control afforded at the level of at least one electric lock (1a), by the receiver means (8a) for waves carrying a code and the associated transmitter element (10a), specific to this lock.
